# EUROPÄISCHE PATENTANMELDUNG

(11) **EP 1 289 086 A1**
(43) Veröffentlichungstag der Anmeldung: **05.03.2003**
(21) Anmeldenummer: 02018377.8
(22) Anmeldetag: 14.08.2002
(51) Int. Cl.: H02G 3/06, H02G 3/22

(54) **Vorrichtung zur Fixierung von Kabelverschraubungen**

(30) Priorität: 27.08.2001 DE 10141801
(71) Anmelder: SIEMENS AKTIENGESELLSCHAFT, 80333 München (DE)
(72) Erfinder: Nöth, Christoph, 97724 Burglauer (DE)

(57) **Zusammenfassung**

Vorrichtung zur Fixierung von zumindest einem Verschraubungselement (1) an Wandungen (2,2') von geschlossenen oder halboffenen Gehäusen, wobei vor der Wandung (2,2') befindliche Elemente über zumindest eine Ausnehmung der Wandung (2,2') mit hinter der Wandung (2,2') befindlichen Elementen über zumindest ein Kabel (6) verbunden ist, wobei das Verschraubungselement (1) in der Ausnehmung zur Kabelführung vorgesehen ist und Mittel vorhanden sind, die das Verschraubungselement (1) an der Wandung (2,2') fixieren, wobei das Verschraubungselement (1) zumindest einen Gewindegang aufweist und durch zumindest ein Blechelement fixierbar ist.

## Beschreibung

Die Erfindung betrifft eine Vorrichtung zur Fixierung von einer Kabelverschraubung an Wandungen von geschlossenen oder halboffenen Gehäusen, wobei vor der Wandung befindliche Elemente über zumindest eine Ausnehmung der Wandung mit hinter der Wandung befindlichen Elementen über zumindest ein Kabel verbunden ist, wobei das Verschraubungselement in der Ausnehmung zur Kabelführung vorgesehen ist und Mittel vorhanden sind, die das Verschraubungselement an der Wandung fixieren.

Zur Fixierung von Kabeln werden vorzugsweise Verschraubungen in Klemmenkästen verwendet, z.B. von Elektromotoren oder in Nieder- oder Mittelspannungsschaltschränken. Es wird ein Loch mit einem Gewinde in die Wandung eines Gehäuses gebohrt oder es wird eine Metallmutter mit einem Gewinde verwendet um die Kabelverschraubung zu fixieren. Es werden auch Kunststoffmuttern für den gleichen Zweck eingesetzt.

Nachteilig dabei ist, dass diese Kunststoffmuttern aufgrund ihrer Materialeigenschaften nicht bei allen Umgebungstemperaturen eingesetzt werden können. Bei Verwendung einer Gewindemutter muss diese bei der Montage mit einem Schraubenschlüssel gegen Verdrehen gesichert werden.

Nachteilig dabei ist außerdem, dass bei den bekannten Kabelverschraubungen der Fertigungsaufwand relativ hoch ist, da nach Einbringen der Bohrung in die Wandung des Gehäuses ein Gewinde vorzusehen ist, das durch eine spanende Bearbeitung erzeugt werden muss.

Ausgehend davon liegt der Erfindung die Aufgabe zugrunde, eine Vorrichtung zur Fixierung von Verschraubungselementen zu schaffen, die durch einfache Konstruktion und preiswertem Herstellverfahren die bisherigen Verdrehsicherungen und Fixierungen ersetzen kann.

Die Lösung der gestellten Aufgabe gelingt dadurch, dass das Verschraubungselement zumindest einen Gewindegang aufweist und durch zumindest ein Blechelement fixierbar ist.

Das Blechelement ist vorzugsweise als Blechmutter oder Teil eines Gehäuses ausgebildet.

Der Vorteil dabei ist, dass Blechmuttern einfach herzustellen sind. Bei Blechmuttern wird die Gewindekontur, d.h. ein Gewindegang oder ein Teil eines Gewindeganges durch Tiefziehen geformt. Dabei kann die Gewindekontur auch Teil eines Gehäuseteils oder Gehäuses sein. Damit stellt sich bereits bei der Herstellung derartiger Blechmuttern eine erheblicher Kostenreduktion ein, die sich insbesondere bei hohen Stückzahlen bemerkbar macht. Die Blechmutter weisen gegenüber herkömmlichen Muttern mit geschnittenem Gewinde ausreichende mechanische Eigenschaften auf. Dies resultiert aus der Tatsache, dass sich das Blechteil mit tiefgezogenem Gewindegang beim Festziehen der Schraube auf den Gewindekern aufzieht.

Durch Anbringen einer Verdrehsicherung an der Blechmutter, die durch Formgebung der Blechmutter z.B. durch Nasen ausgeführt ist, wird gewährleistet, dass sich das Gewinde selbsttätig auf den Gewindegang des Verschraubungselements aufzieht. Die Verdrehsicherung durch Formgebung der Blechmutter stellt sich vorzugsweise auch durch Wechselwirkung mit benachbarten Gehäuseteilen ein, z.B. Klemmenkästen.

Die Verdrehsicherung ist auch als Nase ausbildbar, die sich in einer Bohrung im Gehäuse fixiert. Ebenso ist die Verdrehsicherung als Sperrkantprägung oder durch anschweißen der Blechmutter am Gehäuse ausbildbar.

Die Erfindung sowie weitere vorteilhafte Ausgestaltungen der Erfindung sind anhand schematisch dargestellter Ausführungen im folgenden erläutert. Darin zeigen:
- FIG 1: den Längsschnitt eines Verschraubungselements durch die Wandung und die Fixierung durch eine Blechmutter,
- FIG 2: die Blechmutter,
- FIG 3: eine Seitenansicht der Blechmutter,
- FIG 4: eine perspektivische Darstellung eines Verschraubungselements mit einer Blechmutter,
- FIG 5: eine perspektivische Darstellung einer Blechmutter mit zwei nebeneinander angeordneten Gewinden,
- FIG 6: Blechkasten mit Gewindegang,
- FIG 7: Blechmutter mit Nase.

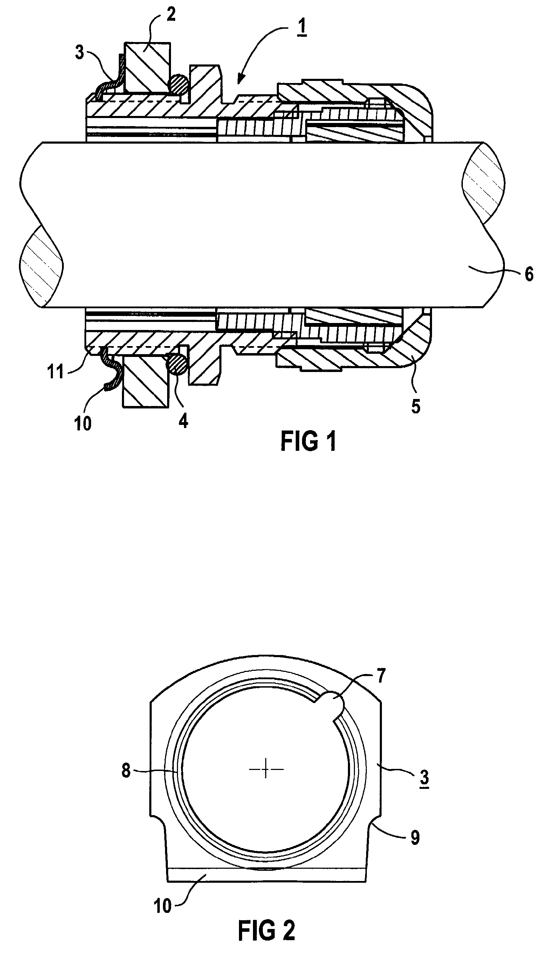

FIG 1 zeigt eine Vorrichtung zur Fixierung von Kabeln 6, mit einem Verschraubungselement 1 an einer Wandung 2 eines nicht näher dargestellten Gehäuses. Derartige Vorrichtungen sind insbesondere in Gehäusen der Energietechnik einzusetzen. Bevorzugte Anwendungsgebiete sind dort die Klemmenkästen elektrischer Maschinen und Schaltschränke. Aber auch in der Datentechnik sind derartige Vorrichtungen zur Fixierung von Kabeln 6 einzusetzen.

Das Verschraubungselement 1 weist dabei, um eine erfindungsgemäße Fixierung eines Kabels 6 zu erreichen, einen Gewindegang 11 auf, auf den die Blechmutter 3 durch den Einschraubvorgang aufgezogen wird und durch eine in dieser Darstellung nicht dargestellten Verdrehsicherung fixiert ist.

Um Feuchtigkeit oder elektromagnetische Strahlung abzuschirmen, sind Dichtungselemente 4 vorzusehen.

FIG 2 zeigt eine Verdrehsicherung der Blechmutter 3, die durch Formgebung der Umlaufkante 9 oder Biegungen 10 der Blechmutter 3 geschaffen ist. Mit 7 ist dabei ein Ausschnitt bezeichnet, der fertigungstechnisch als Gewindeanfang und/oder -ende notwendig ist. Dabei tritt insbesondere mit der Wandung 2 des Gehäuses, wie z.B. einer nicht näher dargestellten Rippe 13 eine Wechselwirkung ein, die damit eine Verdrehsicherung herstellt.

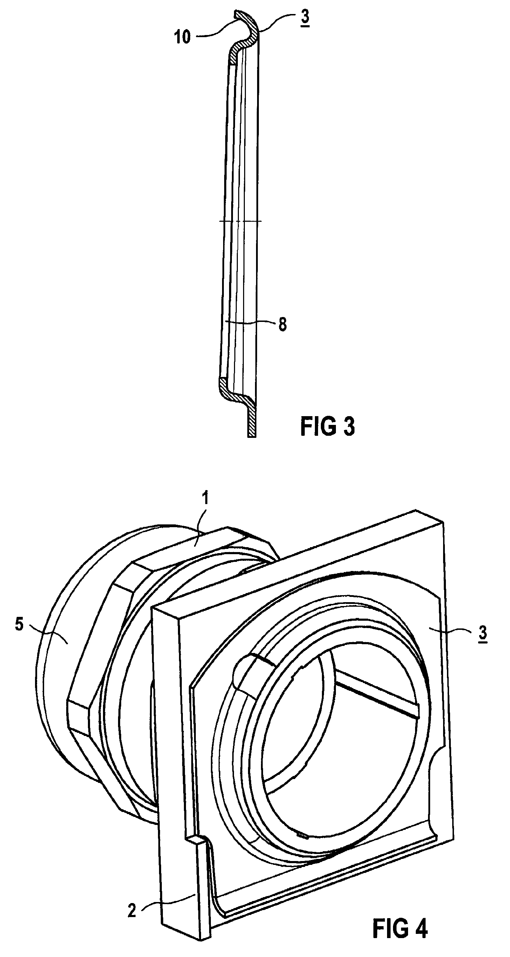

FIG 3 zeigt in einem Querschnitt den Verlauf der Gewindekontur 8 der Blechmutter 3 und eine Möglichkeit der Gestaltung einer speziellen Verdrehsicherung durch Biegung 10 der Blechmutter 3.

FIG 4 zeigt in einer perspektivischen Darstellung dass das Verschraubungselement 1, das durch die Blechmutter 3 und der Rippe 13 an der Wandung 2 fixiert ist. Mit 5 ist eine Mutter mit innerem Kegel dargestellt, die ein nicht näher dargestelltes Kunststoffelement zusammendrückt und dadurch eine Zugentlastung für das Kabel 6 schafft.

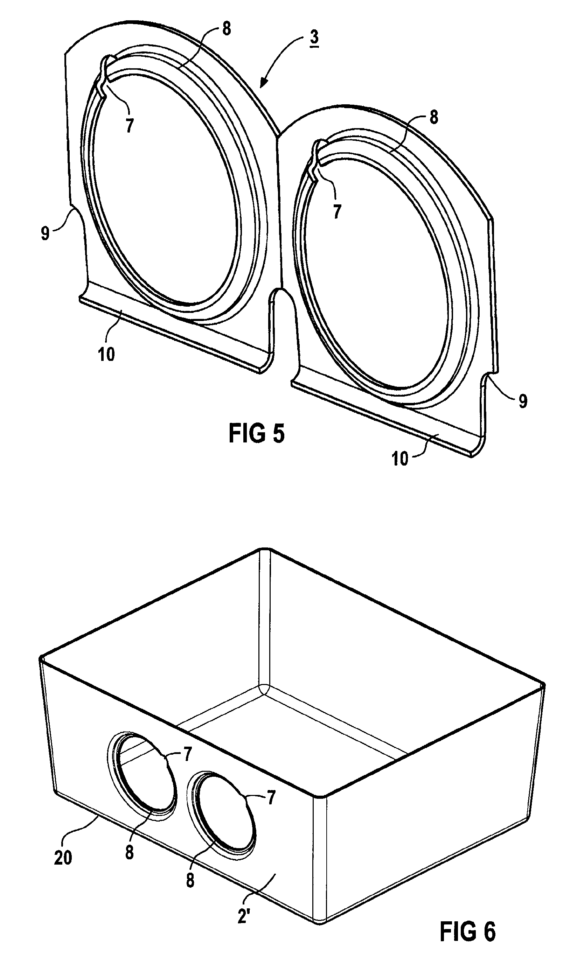

FIG 5 zeigt in einer perspektivischen Darstellung eine Blechmutter 3 mit Ausgestaltung der Verdrehsicherung durch Formgebung der Blechmutter 3 bzgl. ihrer Umlaufkante 9 und der Biegung 10. Die Blechmuttern 3 können nicht nur einteilig sondern auch mehrteilig ausgeführt werden, wie FIG 5 prinzipiell darstellt, so dass mehrere Kabel 6 durch Verschraubungselemente 1 neben oder übereinander fixierbar sind.

FIG 6 zeigt in einer perspektivischen Darstellung ein als Blechkasten 20 ausgebildetes Gehäuse, in dessen Wandung 2' Ausnehmungen mit Gewindekontur 8, d.h. einem Gewindegang oder Teil eines Gewindeganges dargestellt sind. Blechkasten und Gewindegang sind durch Tiefziehen herstellbar. Besonders vorteilhaft ist es, Blechkasten 20 und Gewindekontur in einem Tiefziehvorgang herzustellen.

Die Gewindekontur 8 selbst ist auch in den Blechkasten 20 einpräg- oder einstanzbar.

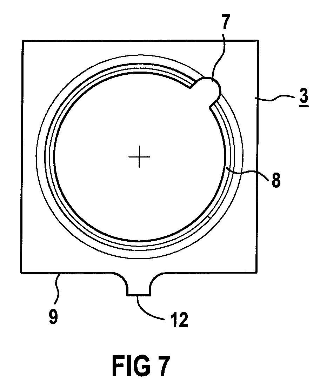

FIG 7 zeigt eine Blechmutter 3 mit einer Nase 12 als Verdrehsicherung.

Als Blecharten sind vorzugsweise Edelstahl, Federbandstahl und hochfestes Stahlblech zu verwenden.

## Patentansprüche

1. Vorrichtung zur Fixierung von zumindest einem Verschraubungselement (1) an Wandungen (2,2') von geschlossenen oder halboffenen Gehäusen, wobei vor der Wandung (2,2') befindliche Elemente über zumindest eine Ausnehmung der Wandung (2,2') mit hinter der Wandung (2,2') befindlichen Elementen über zumindest ein Kabel (6) verbunden ist, wobei das Verschraubungselement (1) in der Ausnehmung zur Kabelführung vorgesehen ist und Mittel vorhanden sind, die das Verschraubungselement (1) an der Wandung (2,2') fixieren, **dadurch gekennzeichnet, dass** das Verschraubungselement (1) zumindest einen Gewindegang aufweist und durch zumindest ein Blechelement fixierbar ist.

2. Vorrichtung nach Anspruch 1, **dadurch gekennzeichnet, dass** das Blechelement zumindest einen Teil eines Gewindeganges (8) aufweist.

3. Vorrichtung nach Anspruch 1 oder 2, **dadurch gekennzeichnet, dass** das Blechelement durch einen Tiefziehvorgang herstellbar ist.

4. Vorrichtung nach einem oder mehreren der vorhergehenden Ansprüche, **dadurch gekennzeichnet, dass** das Blechelement als Blechmutter (3) oder als Teil des Gehäuses ausgeführt ist.

5. Vorrichtung nach einem oder mehreren der vorhergehenden Ansprüche, **dadurch gekennzeichnet, dass** die Blechmutter (3) Mittel (9,10) zur Verdrehsicherung aufweist.

6. Vorrichtung nach Anspruch 5, **dadurch gekennzeichnet, dass** die Umlaufkante (9) der Blechmutter (3) so gestaltet ist, dass durch Wechselwirkung mit benachbarten Teilen insbesondere Gehäuseteilen eine Verdrehsicherung geschaffen ist.

7. Vorrichtung nach Anspruch 6, **dadurch gekennzeichnet, dass** die Blechmutter (3) zusätzliche Elemente aufweist, die eine Verdrehsicherung schaffen.

8. Vorrichtung nach Anspruch 7, **dadurch gekennzeichnet**, dass die Blechmutter (3) umlegbare Elemente (10) aufweist.
